# EUROPEAN PATENT SPECIFICATION

(11) **EP 3 056 973 B1**
(45) Date of publication and mention of the grant of the patent: **22.05.2019**
(21) Application number: 16154302.0
(22) Date of filing: 04.02.2016
(51) Int. Cl.: G06F 3/0362, G06F 3/03, G06F 3/0487, B60K 37/06, G05G 1/08, G05G 1/10, G06F 3/0484, H01H 25/06

(54) **INPUT/OUTPUT DEVICE**
EINGABE/AUSGABE-VORRICHTUNG
DISPOSITIF D'ENTRÉE/SORTIE

(30) Priority: 10.02.2015 KR 20150020358
(43) Date of publication of application: 17.08.2016
(73) Proprietor: LG Electronics Inc., Seoul 07336 (KR)
(72) Inventor: KIM, Hyunseok, 08592 Seoul (KR); JEON, Hoil, 08592 Seoul (KR)
(74) Representative: Vossius & Partner Patentanwälte Rechtsanwälte mbB

(56) References cited:
- EP-A2- 2 042 971
- US-A1- 2005 259 077
- US-A1- 2014 043 303
- US-A1- 2014 168 132
- US-B1- 7 671 851
- US-B2- 6 968 508

## Description

The present invention relates to an input/output device provided in, for example, electronic appliances.

Electronic appliances, including laundry treatment apparatuses capable of performing the washing of laundry, the drying of laundry, or both the washing and drying of laundry, necessarily include an input/output device, through which a user inputs control commands to the electronic appliance.

US2014/168132 A1 discloses a device comprising a display and several rotating structures placed above the display which can be used to interact with the display content. The rotational structures have a hole in the centre in such a way that the display is visible and information related to the input components is displayed in the part of the display visible through the hole of the rotational structures.

US7671851 B1 discloses a rear projection display including some input components as rotators or switches through which the information provided by the display can be seen.

US6968508 B2 discloses a rotational input component and a display placed behind the input element. The rotational input component comprises a hole in the middle in such a way that the display is visible. The user can interact with the display content by rotating the input element.

EP2042971 A2 discloses a device comprising two displays and a rotational input component. One of the displays is placed in a hole in the centre of the rotational component.

Conventional input/output devices generally include a display unit, which displays control commands that the user can select, and an input unit, which allows the user to select the control commands displayed on the display unit.

In addition, the conventional input/output devices need to arrange the display unit and the input unit to be separated from each other in the width direction of the electronic appliance, or to be separated from each other in the height direction of the electronic appliance. That is, it has been difficult to locate the input unit above the display surface (the surface of a display region) of the display unit on which information is displayed.

Therefore, the conventional input/output devices having the above-described configuration require a wide space for the installation of the input/output device, and thus there is a limitation in the design of the input/output device.

Accordingly, the present invention is directed to an input/output device that substantially obviates one or more problems due to limitations and disadvantages of the related art.

The invention is set out in the appended claims. The reader should bear in mind that some embodiments or examples of the description may not comprise all features of the invention as claimed.

One object of the present invention is to provide an input/output device including an input unit that is located in the upper region of a display surface, on which a control command or information is displayed, and enables the selection or input of a control command.

In addition, another object of the present invention is to provide an input/output device that is capable of transmitting a control command or information to a user via an input unit.

In addition, another object of the present invention is to provide an input/output device that enhances the visibility of a control command or information displayed via an input unit.

In addition, a further object of the present invention is to provide an input/output device that requires a minimum installation space.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

The object(s) is achieved with the features of the independent claims. The dependent claims relate to further aspects of the invention.

To achieve these objects and other advantages and in accordance with the purpose of the invention, as embodied and broadly described herein, in accordance with an aspect of the present invention, an input/output device includes an output unit having a display surface, on which characters or symbols are displayed, a body rotatably provided above the display surface, a body through-hole formed in the body to allow the display surface to be visible from an outside of the body, a signal generation unit configured to generate a control signal according to whether the body is rotated, and a controller configured to control the output unit based on the control signal input from the signal generation unit.

The input/output device may further include a window provided in the body through-hole to enlarge the characters or symbols displayed on a projection surface formed as the body through-hole is projected onto the display surface.

The controller may control the output unit so that characters or symbols, displayed on a projection surface formed as the body through-hole is projected onto the display surface, have a different size from a size of characters or symbols displayed outside the projection surface.

The signal generation unit may include a first generator configured to generate a control signal when the body is rotated, and a second generator configured to generate a control signal when the body is pushed toward the output unit.

The input/output device may further include a first housing to which the output unit is fixed, a second housing spaced apart from the display surface by a prescribed distance, a through-hole formed in the second housing so that the body is inserted thereinto, and a support unit provided at the first housing or the second housing to rotatably support the body.

The support unit may include a support body located between the body and the output unit, a support body through-hole formed in the support body so as to communicate with the body through-hole, and a guide provided at the support body to rotatably support the body.

The guide may include an accommodation recess configured to accommodate an outer circumferential surface of the body.

The guide may include a first flange provided at the support body to couple the support body to the second housing, the first flange being configured to accommodate an outer circumferential surface of the body, and a second flange provided at the support body so as to be inserted into the body through-hole, the second flange being spaced apart from the first flange by a prescribed distance.

The input/output device may further include a driving gear provided along an outer circumferential surface of the body, and the signal generation unit may include a driven gear configured to be engaged with the driving gear and a signal generator configured to generate a control signal according to whether the driven gear is rotated.

The output unit may include a first display unit located inside the body through-hole, and a second display unit located outside the body through-hole.

The body may be provided in a direction in which light emitted from the display surface travels.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate examples of the present disclosure and together with the description serve to explain the principle of the present invention. In the drawings:
FIG. 1 is a view illustrating one example of a laundry treatment apparatus including an input/output device in accordance with the present invention;
FIG. 2 is a sectional view illustrating the input/output device in accordance with the present invention;
FIG. 3A is a perspective view illustrating the input/output device with a housing omitted;
FIG. 3B is an exploded view of the input/output device with a housing omitted according to Fig. 3A;
FIG. 4 is a view illustrating the coupling configuration of an input unit, a signal generation unit, and an output unit provided in the input/output device; and
FIG. 5 is a view illustrating another aspect of the input/output device in accordance with the present invention.

### DETAILED DESCRIPTION OF THE INVENTION

Hereinafter, aspects of the present disclosure will be described in detail with reference to the accompanying drawings. Meanwhile, the configuration or control method of a device that will be described hereinafter is provided for explanation of aspects of the present disclosure, and is not intended to limit the technical range of the present invention. The same reference numerals throughout the entire specification designate the same constituent elements.

An input/output device of the present invention serves not only as means to input a control command to various apparatuses, but also as means to control an output unit (e.g. a display device) provided in the respective apparatuses to transmit information to a user.

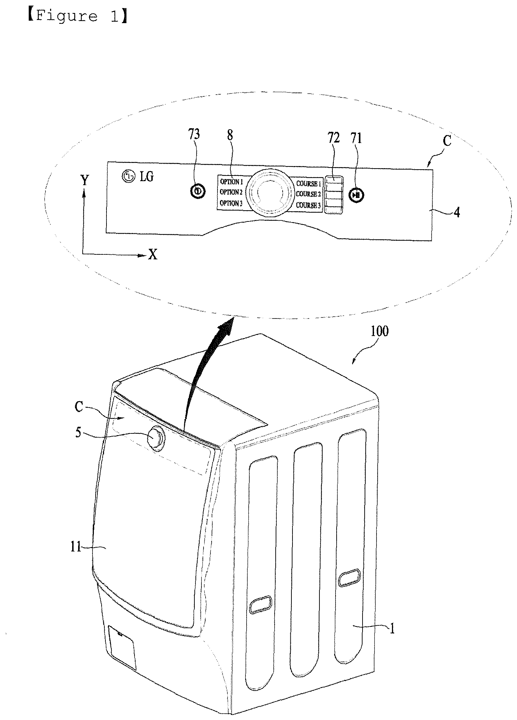

FIG. 1 is a view illustrating one example of a laundry treatment apparatus 100 including an input/output device C according to the present invention.

The laundry treatment apparatus 100 may include a cabinet 1 defining the external appearance, a drum (not illustrated) placed inside the cabinet 1 to provide a space in which laundry is accommodated, a door 11 provided at the cabinet 1 to communicate the interior of the drum with the exterior of the cabinet 1, and a drive unit (not illustrated) to rotate the drum.

The input/output device C of the present invention may be fixed to the door 11, or may be fixed to the cabinet 1 at a position above or below the door 11 (separately from the door 11).

In any case, the input/output device C must serve as means to enable the display of control commands that the user can select, and/or the selection of displayed control commands, and/or the execution of a selected control command.

In addition, the input/output device C may serve as means to display the operating state of the laundry treatment apparatus 100 or information related to a selected control command while the laundry treatment apparatus 100 is executing the selected control command.

To implement the functions described above, the input/output device C of the present invention may include an output unit 8, which displays characters or symbols, and an input unit 5, which allows the user to select a control command displayed on the output unit 8.

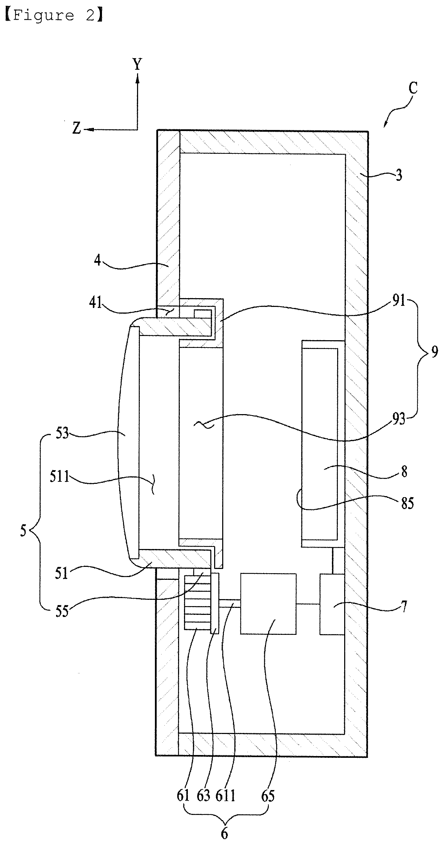

The output unit 8 and the input unit 5 may be coupled to the laundry treatment apparatus 100 via a housing. As exemplarily illustrated in FIG. 2, the housing may include a first housing 3, to which the output unit 8 is fixed, and a second housing 4, to which the input unit 5 is rotatably coupled.

When the first housing 3 and the second housing 4 define the external appearance of the input/output device C and respective constituent components of the input/output device C are accommodated in the first housing 3 and the second housing 4, it may be ensured that the input/output device C of the present invention may be easily coupled to various apparatuses including the laundry treatment apparatus 100.

Provided inside the housings 3 and 4 may be a support unit 9, which rotatably supports the input unit 5, a signal generation unit 6, which generates a control signal when the input unit 5 is rotated, and a controller 7, which controls the output unit 8 in response to the control signal transmitted from the signal generation unit 6.

The second housing 4 may be formed of a material that is capable of transmitting light, in order to enable information (e.g. a control command indicated using characters or symbols) displayed on the output unit 8 fixed to the first housing 3 to be checked from the exterior of the second housing 4.

Although the entire second housing 4 may be formed of a translucent material, alternatively, only the region of the second housing 4 at which the output unit 8 is projected on the second housing 4 may be formed of a translucent material.

In order to rotatably couple the input unit 5 to the second housing 4, the second housing 4 has a through-hole 41, into which the input unit 5 is inserted.

However, when the input/output device C of the present invention is provided on the door 11 and the door 11 is formed of a material that is capable of transmitting light, the second housing 4 may be replaced with the front surface of the door 11.

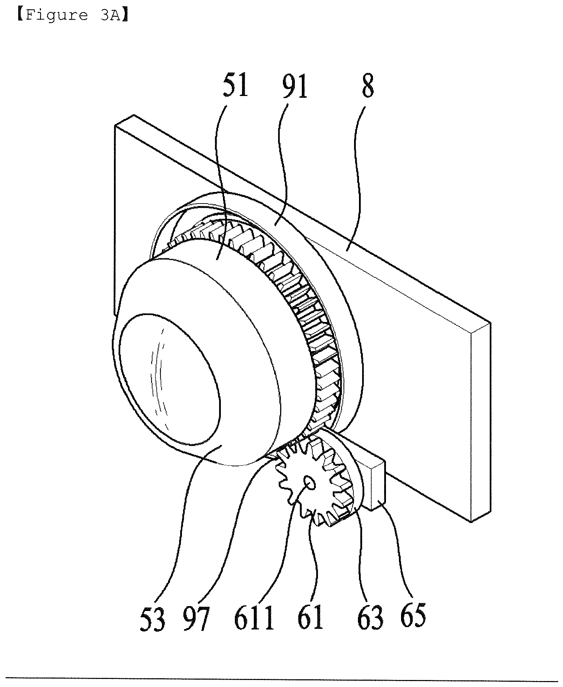

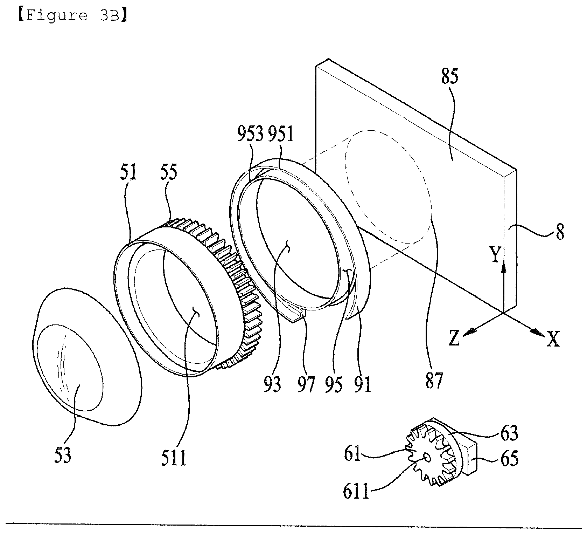

As exemplarily illustrated in FIGs. 3A and 3B, the input unit 5 includes a body 51, which is rotatably supported in the through-hole 41 by the support unit 9, and a body through-hole 511 formed in the body 51 to extend in the height direction Z of the body 51.

The body 51 may have a cylindrical shape, and a driving gear 55 is provided on the outer circumferential surface of the body 51 to transmit torque of the body 51 to the signal generation unit 6.

The body through-hole 511 is a passage through which light emitted from the output unit 8 is discharged to the exterior of the body 51. A window 53 formed of a translucent material may be provided in the body through-hole 511.

As exemplarily illustrated in FIG. 3B, the support unit 9 may include a support body 91 located between the input unit 5 and the output unit 8, a support body through-hole 93 formed in the support body 91, and a guide 95 in which the body 51 is accommodated.

The support body 91 is necessarily fixed to at least one of the first housing 3 and the second housing 4. FIGs. 2 and 3 illustrate one exemplary case in which the support body 91 is fixed to the first housing 3.

In this case, the guide 95 may include a first flange 951 configured to couple the support body 91 and the first housing 3 to each other, and a second flange 953 spaced apart from the first flange 951 toward the center of the support body through-hole 93 by a prescribed distance. One end of the body 51 (i.e. the end of the body 51 having no window) may be inserted into an accommodation recess formed between the first flange 951 and the second flange 953.

When the body 51 of the input unit 5 has a cylindrical shape, at least one of the first flange 951 and the second flange 953 may have a cylindrical shape.

Meanwhile, to allow the support unit 9 to more stably support the body 51 of the input unit 5, the length of the second flange 953 may be determined to allow the second flange 953 to be inserted into the body through-hole 511, and the first flange 951 may have a communication portion 97, which allows the driving gear 55, located in the accommodation recess between the first flange 951 and the second flange 953, to be exposed to the exterior of the first flange 951.

The communication portion 97 may have any shape so long as it allows a portion of the driving gear 55 located in the accommodation recess to be exposed to the exterior of the first flange 951. FIG. 3B illustrates one exemplary case in which the communication portion 97 has a slit form.

Meanwhile, the first flange 951 and the second flange 953 do not need to be formed into a cylindrical shape as exemplarily illustrated in FIGs. 3A and 3B. That is, each of the flanges 951 and 953 may be configured as a plurality of bosses protruding from the support body 95. The respective bosses forming the first flange 951 may be provided so as to accommodate the outer circumferential surface of the body 51, and the respective bosses forming the second flange 953 may be provided so as to be inserted into the body through-hole 511.

The signal generation unit 6, which generates a control signal when the body 51 is rotated, may include a driven gear 61 configured to be engaged with the driving gear 55, and a signal generator 65 which generates a control signal when a shaft 611 of the driven gear 61 is rotated.

The signal generator 65 generates a signal whenever the shaft 611 is rotated by a predetermined reference angle, and transmits the control signal to the controller 7. As such, the signal generator 65 serves as means to allow the controller 7 to determine whether or not the body 51 is rotated, or the rotation angle of the body 51.

The output unit 8 (e.g. an LCD panel or an LED panel) serves to transmit a control command or information, displayed as characters or symbols by the controller 7, to the user. The output unit 8 includes a display surface 85 on which information is displayed. The display surface 85 needs to face the second housing 4.

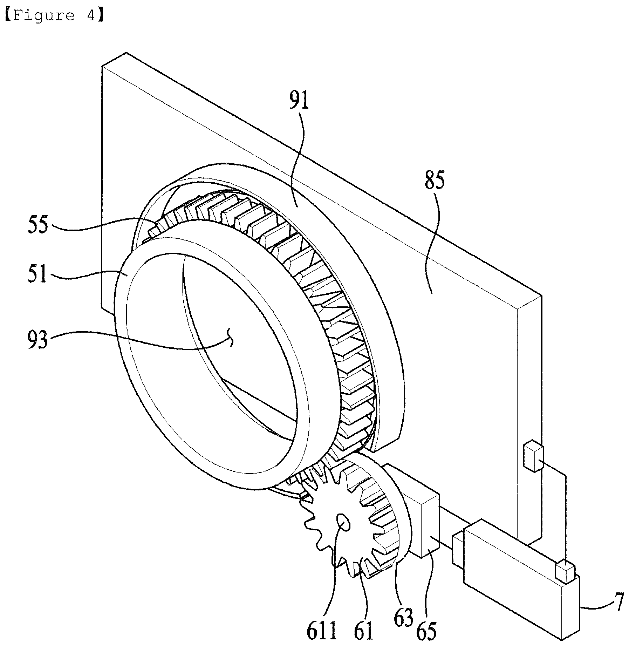

As exemplarily illustrated in FIG. 4, in the input/output device C having the above-described configuration, the signal generation unit 6 may transmit a control signal to the controller 7 whenever the input unit 5 is rotated by a reference angle, and the controller 7 may display a plurality of control commands stored in the laundry treatment apparatus 100 one by one on the output unit 8 according to a predetermined sequence whenever the control signal is input to the controller 7.

In addition, in the case where the input/output device C having the above-described configuration displays one or more control commands stored in the laundry treatment apparatus 100 on the output unit 8, the controller 7 may differentiate the brightness or size of a corresponding one of the control commands, displayed as characters or symbols on the output unit 8, from the other control commands whenever the input unit 5 is rotated by a reference angle, so as to sequentially highlight the control command that the user can select.

In any case, the input/output device C having only the above-described configuration requires a separate input device that selects any one of a plurality of selectable control commands, or requests the execution of a control command. To this end, the second housing 4 may further include a first selector 71, which requests the execution of a control command displayed on the output unit 8, and a second selector 72, which enables the selection of a control command displayed on the output unit 8 and the selection of an option corresponding to a selected control command (i.e. a control command that maybe added to the selected control command) (see FIG. 1).

Alternatively, the signal generation unit 6 may include a first generator (not illustrated), which generates a control signal whenever the body 51 is rotated by a reference angle, and a second generator (not illustrated), which generates a control signal when pressure is applied to the body 51 in the direction in which the output unit 8 is located (-Z axis). With this configuration, at least one of the first selector 71 and the second selector 72 described above may be omitted, which serves to minimize the installation space of the input/output device C.

In this case, the first generator may determine whether or not the driven gear 61 is rotated via the shaft 611, thereby determining whether or not the body 51 is rotated by a predetermined angle. The second generator may determine whether or not pressure is applied to the shaft 611, thereby determining whether or not pressure is applied to the body 51.

To allow the shaft 611 to be pushed toward the output unit 8 when the body 51 is pushed toward the output unit 8, a gear support member 63 may be provided on the underside of the driven gear 61 and may serve to move the shaft 611 toward the output unit 8 when the driving gear 55 is moved toward the output unit 8.

Hereinafter, the operating procedure of the input/output device C in accordance with the present invention will be described with reference to FIGs. 1 to 4.

To operate the laundry treatment apparatus 100 illustrated in FIG. 1, the user needs to supply electric power to the laundry treatment apparatus 100 via a power input unit 73. The power input unit 73 may serve not only to supply electric power to the controller 7 and the output unit 8 provided in the input/output device C, but also to supply electric power to respective components of the laundry treatment apparatus 100 that require the supply of electric power.

The power input unit 73 may be integrated with the input/output device C of the present invention, or may be provided separately from the input/output device C.

Meanwhile, when electric power is supplied to the laundry treatment apparatus 100, the controller 7 displays, on the output unit 8, one or more control commands stored in the laundry treatment apparatus 100, and thereafter highlights each control command that the user can select whenever the body 51 is rotated by a predetermined angle, or sequentially highlights selectable control commands whenever the body 51 is rotated by a predetermined angle.

In the case of the input/output device C including the first selector 71 and the second selector 72, the user may push the first selector 71 when a desired control command is displayed on the output unit 8, thereby inputting a command to execute the selected control command.

In addition, the user may select a control command (option) that may be added to the selected control command via the second selector 72, and thereafter may input a command to execute the selected control command or option to the controller 7 via the first selector 71.

Alternatively, in the case of the input/output device C in which the signal generation unit 6 includes both the first generator and the second generator, the user may rotate the body 51 so that a desired control command is displayed on the output unit 8, and thereafter push the body 51 to input a command to select or execute the control command displayed on the output unit 8 to the controller 7.

Meanwhile, the input/output device C of the present invention is configured to allow the user to check information displayed on the output unit 8 through the body through-hole 511 formed in the input unit 5.

Accordingly, the controller 7 may control the output unit 8 so that the control commands stored in the laundry treatment apparatus 100 are displayed in a region outside the projection surface (87, see FIG. 3B), onto which the body through-hole 511 is projected, of the display surface 85 of the output unit 8, and so that information regarding the execution of a selectable control command or a selected control command is displayed on the projection surface 87.

The information displayed on the projection surface 87 may include, for example, a control command that is selectable whenever the user rotates the body 51 of the input unit 5, the execution time of the selected control command, the remaining time of the control command that is being executed, and whether or not the selected control command has ended.

In addition, in order to enhance the visibility of the information displayed on the projection surface 87, the window 53, located in the body through-hole 511, may have a material or shape such that the size of characters or symbols displayed on the projection surface 87 is enlarged.

In this way, the thickness or width of the input/output device C of the present invention may be minimized because the input unit 5 is located in the direction in which light emitted from the output unit 8 travels, and may advantageously maximize the use of the display surface 85 of the output unit 8 despite the fact that the input unit 5 is located above the output unit 8 because the user can check the information on the display surface via the input unit 5.

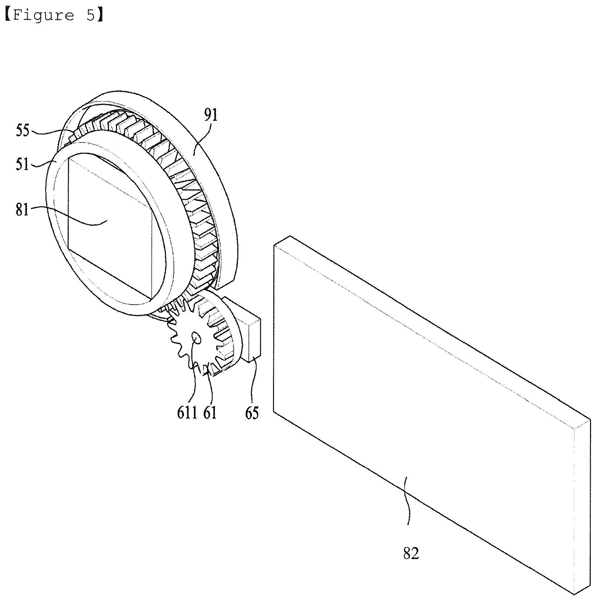

Meanwhile, the output unit 8 provided in the input/output device C of the present invention may be divided into a first display unit 81 and a second display unit 82 as exemplarily illustrated in FIG. 5. In this case, the first display unit 81 may be located inside the body through-hole 511, and the second display unit 82 may be located outside the body through-hole 511.

The user can check a control command or information displayed on the first display unit 81 through the body through-hole 511 and the window 53 of the input unit 5, and can check a control command or information displayed on the second display unit 82 through a translucent region of the second housing 4.

The above description describes the case where the input/output device C of the present invention is provided in the laundry treatment apparatus 100 by way of example, and therefore it will be appreciated that the input/output device C of the present invention may be applied to any electronic appliance in which it is required for the appliance to display information to the user upon receiving a control command from the user.

As is apparent from the above description, the present invention may have the effect of providing an input/output device including an input unit that is located in the upper region of a display surface (in the direction in which light emitted from the display surface travels), on which a control command or information is displayed, and enables the selection or input of a control command.

In addition, the present invention may have the effect of providing an input/output device that is capable of transmitting a control command or information to a user via an input unit.

In addition, the present invention may have the effect of providing an input/output device that enhances the visibility of a control command or information displayed via an input unit.

In addition, the present invention may have the effect of providing an input/output device that requires a minimum installation space.

## Claims

1. An input/output device (C) comprising:
an output unit (8) having a display surface (85), on which characters or symbols are displayed;
a body (51) rotatably provided above the display surface (85);
a body through-hole (511) formed in the body (51) to allow the display surface (85) to be visible from an outside of the body (51);
a signal generation unit (6) configured to generate a control signal according to whether the body (51) is rotated; and
a controller (7) configured to control the output unit (8) based on the control signal input from the signal generation unit (6),
**characterized in that** the controller (7) is further configured to control the output unit (8) so that characters or symbols are displayed in a region outside a projection surface (87) formed as the body through-hole (511) is projected onto the display surface (85), the characters or symbols displayed in the region outside the projection surface (87) being highlighted in brightness or size sequentially whenever the body (51) is rotated by a reference angle, and
the controller (7) is configured to control the output unit (8) so that information regarding the highlighted character or symbol is displayed in a region inside the projection surface (87) whenever the body is rotated by the reference angle.

2. The input/output device (C) according to claim 1, further comprising a window (53) provided in the body through-hole (511) to enlarge the characters or symbols displayed on the projection surface (87).

3. The input/output device (C) according to claim 1 or 2, wherein the controller (7) controls the output unit (8) so that characters or symbols, displayed on the projection surface (87), have a different size from a size of characters or symbols displayed outside the projection surface (87).

4. The input/output device (C) according to any one of claims 1 to 3, wherein the signal generation unit (6) includes:
a first generator configured to generate a control signal when the body (51) is rotated; and
a second generator configured to generate a control signal when the body (51) is pushed toward the output unit (8).

5. The input/output device (C) according to any one of claims 1 to 4, further comprising:
a first housing (3) to which the output unit (8) is fixed;
a second housing (4) spaced apart from the display surface (85) by a prescribed distance;
a through-hole (41) formed in the second housing (4) so that the body (51) is inserted thereinto; and
a support unit (9) provided at the first housing (3) or the second housing (4) to rotatably support the body (51).

6. The input/output device (C) according to claim 5, wherein the support unit (9) includes:
a support body (91) located between the body (51) and the output unit (8);
a support body through-hole (93) formed in the support body (91) so as to communicate with the body through-hole (511); and
a guide (95) provided at the support body (91) to rotatably support the body (51).

7. The input/output device (C) according to claim 6, wherein the guide (95) includes an accommodation recess configured to accommodate an outer circumferential surface of the body (51).

8. The input/output device (C) according to claim 6 or 7, wherein the guide (95) includes:
a first flange (951) provided at the support body (91) to couple the support body (91) to the second housing (4), the first flange (951) being configured to accommodate an outer circumferential surface of the body (51); and
a second flange (953) provided at the support body (91) so as to be inserted into the body through-hole (511), the second flange (953) being spaced apart from the first flange (951) by a prescribed distance.

9. The input/output device (C) according to any one of claims 1 to 8,
further including a driving gear (55) provided along an outer circumferential surface of the body (51);
wherein the signal generation unit (6) includes a driven gear (61) configured to be engaged with the driving gear (55) and a signal generator (65) configured to generate a control signal according to whether the driven gear (61) is rotated.

10. The input/output device (C) according to any one of claims 1 to 9, wherein the output unit (8) includes:
a first display unit (81) located inside the body through-hole (511); and
a second display unit (82) located outside the body through-hole (511).

11. The input/output device (C) according to any one of claims 1 to 10, wherein the body (51) is provided in a direction in which light emitted from the display surface (85) travels.

## Patentansprüche

1. Eingabe/Ausgabe-Vorrichtung (C) mit:
einer Ausgabeeinheit (8), die eine Anzeigefläche (85) aufweist, auf der Zeichen oder Symbole angezeigt werden;
einem Körper (51), der drehbar über der Anzeigefläche (85) vorgesehen ist;
einem Körperdurchgangsloch (511), das im Körper (51) ausgebildet ist, um es zu ermöglichen, dass die Anzeigefläche (85) von außerhalb des Körpers (51) sichtbar ist;
einer Signalerzeugungseinheit (6), die konfiguriert ist, dementsprechend ein Steuersignal zu erzeugen, ob der Körper (51) gedreht wird; und
einem Controller (7), der konfiguriert ist, die Ausgabeeinheit (8) auf der Grundlage des Steuersignals zu steuern, das von der Signalerzeugungseinheit (6) eingegeben wird,
**dadurch gekennzeichnet, dass** der Controller (7) ferner konfiguriert ist, die Ausgabeeinheit (8) so zu steuern, dass Zeichen oder Symbole in einem Bereich außerhalb einer Projektionsfläche (87) angezeigt werden, die gebildet wird, wenn das Körperdurchgangsloch (511) auf die Anzeigefläche (85) projiziert wird, wobei die Zeichen oder Symbole, die im Bereich außerhalb der Projektionsfläche (87) angezeigt werden, jedes Mal, wenn der Körper (51) um einen Referenzwinkel gedreht wird, sequentiell durch ihre Helligkeit oder Größe hervorgehoben werden, und
der Controller (7) konfiguriert ist, die Ausgabeeinheit (8) so zu steuern, dass jedes Mal, wenn der Körper um den Referenzwinkel gedreht wird, Informationen hinsichtlich des hervorgehobenen Zeichens oder Symbols in einem Bereich innerhalb der Projektionsfläche (87) angezeigt werden.

2. Eingabe/Ausgabe-Vorrichtung (C) nach Anspruch 1, die ferner ein Fenster (53) aufweist, das im Körperdurchgangsloch (511) vorgesehen ist, um die auf der Projektionsfläche (87) angezeigten Zeichen oder Symbole zu vergrößern.

3. Eingabe/Ausgabe-Vorrichtung (C) nach Anspruch 1 oder 2, wobei der Controller (7) die Ausgabeeinheit (8) so steuert, dass auf der Projektionsfläche (87) angezeigte Zeichen oder Symbole eine andere Größe als eine Größe der außerhalb der Projektionsfläche (87) angezeigten Zeichen oder Symbole aufweisen.

4. Eingabe/Ausgabe-Vorrichtung (C) nach einem der Ansprüche 1 bis 3, wobei die Signalerzeugungseinheit (6) aufweist:
einen ersten Generator, der konfiguriert ist, ein Steuersignal zu erzeugen, wenn der Körper (51) gedreht wird; und
einen zweiten Generator, der konfiguriert ist, ein Steuersignal zu erzeugen, wenn der Körper (51) zur Ausgabeeinheit (8) gedrückt wird.

5. Eingabe/Ausgabe-Vorrichtung (C) nach einem der Ansprüche 1 bis 4, die ferner aufweist:
ein erstes Gehäuse (3), an dem die Ausgabeeinheit (8) befestigt ist;
ein zweites Gehäuse (4), das von der Anzeigefläche (85) durch einen vorgeschriebenen Abstand beabstandet ist;
ein Durchgangsloch (41), das im zweiten Gehäuse (4) ausgebildet ist, so dass der Körper (51) dort hindurch eingesetzt wird; und
eine Halteeinheit (9), die am ersten Gehäuse (3) oder am zweiten Gehäuse (4) vorgesehen ist, um den Körper (51) drehbar zu halten.

6. Eingabe/Ausgabe-Vorrichtung (C) nach Anspruch 5, wobei die Halteeinheit (9) aufweist:
einen Haltekörper (91), der zwischen dem Körper (51) und der Ausgabeeinheit (8) angeordnet ist;
ein Haltekörperdurchgangsloch (93), das im Haltekörper (91) ausgebildet ist, so dass es mit dem Körperdurchgangsloch (511) in Verbindung steht; und
eine Führung (95), die am Haltekörper (91) vorgesehen ist, um den Körper (51) drehbar zu halten.

7. Eingabe/Ausgabe-Vorrichtung (C) nach Anspruch 6, wobei die Führung (95) eine Aufnahmevertiefung aufweist, die konfiguriert ist, eine Außenumfangsfläche des Körpers (51) aufzunehmen.

8. Eingabe/Ausgabe-Vorrichtung (C) nach Anspruch 6 oder 7, wobei die Führung (95) aufweist:
einen ersten Flansch (951), der am Haltekörper (91) vorgesehen ist, um den Haltekörper (91) mit dem zweiten Gehäuse (4) zu koppeln, wobei der erste Flansch (951) konfiguriert ist, eine Außenumfangsfläche des Körpers (51) aufzunehmen; und
einen zweiten Flansch (953), der am Haltekörper (91) vorgesehen ist, um in das Körperdurchgangsloch (511) eingesetzt zu werden, wobei der zweite Flansch (953) vom ersten Flansch (951) durch einen vorgeschriebenen Abstand beabstandet ist.

9. Eingabe/Ausgabe-Vorrichtung (C) nach einem der Ansprüche 1 bis 8,
die ferner ein antreibendes Zahnrad (55) aufweist, das längs einer Außenumfangsfläche des Körpers (51) vorgesehen ist;
wobei die Signalerzeugungseinheit (6) ein angetriebenes Zahnrad (61), das konfiguriert ist, mit dem antreibenden Zahnrad (55) in Eingriff gebracht zu werden, und einen Signalgenerator (65) aufweist, der konfiguriert ist, dementsprechend ein Steuersignal zu erzeugen, ob das angetriebene Zahnrad (61) gedreht wird.

10. Eingabe/Ausgabe-Vorrichtung (C) nach einem der Ansprüche 1 bis 9, wobei die Ausgabeeinheit (8) aufweist:
eine erste Anzeigeeinheit (81), die innerhalb des Körperdurchgangslochs (511) angeordnet ist; und
eine zweite Anzeigeeinheit (82), die außerhalb des Körperdurchgangslochs (511) angeordnet ist.

11. Eingabe/Ausgabe-Vorrichtung (C) nach einem der Ansprüche 1 bis 10, wobei der Körper (51) in eine Richtung vorgesehen ist, in der sich von der Anzeigefläche (85) emittiertes Licht ausbreitet.

## Revendications

1. Dispositif d'entrée/sortie (C) comprenant :
une unité de sortie (8) ayant une surface d'affichage (85), sur laquelle des caractères ou des symboles sont affichés ;
un corps (51) disposé de manière rotative au-dessus de la surface d'affichage (85) ;
un trou débouchant de corps (511) formé dans le corps (51) pour permettre à la surface d'affichage (85) d'être visible depuis un extérieur du corps (51) ;
une unité de génération de signal (6) configurée pour générer un signal de commande selon si le corps (51) est tourné ; et
un organe de commande (7) configuré pour commander l'unité de sortie (8) sur la base du signal de commande entré depuis l'unité de génération de signal (6),
**caractérisé en ce que** l'organe de commande (7) est en outre configuré pour commander l'unité de sortie (8) de sorte que des caractères ou des symboles soient affichés dans une région en dehors d'une surface de projection (87) formée lorsque le trou débouchant de corps (511) est projeté sur la surface d'affichage (85), les caractères ou les symboles affichés dans la région en dehors de la surface de projection (87) étant mis en évidence par leur brillance ou leur taille séquentiellement à chaque fois que le corps (51) est tourné d'un angle de référence, et
l'organe de commande (7) est configuré pour commander l'unité de sortie (8) de sorte que des informations concernant le caractère ou le symbole mis en évidence soient affichées dans une région à l'intérieur de la surface de projection (87) chaque fois que le corps est tourné de l'angle de référence.

2. Dispositif d'entrée/sortie (C) selon la revendication 1, comprenant en outre une fenêtre (53) disposée dans le trou débouchant de corps (511) pour agrandir les caractères ou les symboles affichés sur la surface de projection (87).

3. Dispositif d'entrée/sortie (C) selon la revendication 1 ou 2, dans lequel l'organe de commande (7) commande l'unité de sortie (8) de sorte que des caractères ou des symboles, affichés sur la surface de projection (87), aient une taille différente d'une taille de caractères ou de symboles affichés en dehors de la surface de projection (87).

4. Dispositif d'entrée/sortie (C) selon l'une quelconque des revendications 1 à 3, dans lequel l'unité de génération de signal (6) inclut :
un premier générateur configuré pour générer un signal de commande lorsque le corps (51) est tourné ; et
un second générateur configuré pour générer un signal de commande lorsque le corps (51) est poussé vers l'unité de sortie (8).

5. Dispositif d'entrée/sortie (C) selon l'une quelconque des revendications 1 à 4, comprenant en outre :
un premier boîtier (3) auquel l'unité de sortie (8) est fixée ;
un second boîtier (4) écarté de la surface d'affichage (85) d'une distance prescrite ;
un trou débouchant (41) formé dans le second boîtier (4) de sorte que le corps (51) soit inséré dans celui-ci ; et
une unité de support (9) disposée au niveau du premier boîtier (3) ou du second boîtier (4) pour supporter le corps (51) de manière rotative.

6. Dispositif d'entrée/sortie (C) selon la revendication 5, dans lequel l'unité de support (9) inclut :
un corps de support (91) situé entre le corps (51) et l'unité de sortie (8) ;
un trou débouchant de corps de support (93) formé dans le corps de support (91) afin de communiquer avec le trou débouchant de corps (511) ; et
un guide (95) disposé au niveau du corps de support (91) pour supporter le corps (51) de manière rotative.

7. Dispositif d'entrée/sortie (C) selon la revendication 6, dans lequel le guide (95) inclut un évidemment de logement configuré pour loger une surface circonférentielle externe du corps (51).

8. Dispositif d'entrée/sortie (C) selon la revendication 6 ou 7, dans lequel le guide (95) inclut :
une première bride (951) disposée au niveau du corps de support (91) pour coupler le corps de support (91) au second boîtier (4), la première bride (951) étant configurée pour loger une surface circonférentielle externe du corps (51) ; et
un second bride (953) disposée au niveau du corps de support (91) afin d'être insérée dans le trou débouchant de corps (511), la seconde bride (953) étant écartée de la première bride (951) d'une distance prescrite.

9. Dispositif d'entrée/sortie (C) selon l'une quelconque des revendications 1 à 8, incluant en outre un pignon d'entraînement (55) disposé le long d'une surface circonférentielle externe du corps (51) ;
dans lequel l'unité de génération de signal (6) inclut un pignon d'entraînement (61) configuré pour être mis en prise avec le pignon d'entraînement (55) et un générateur de signaux (65) configuré pour générer un signal de commande selon si le pignon d'entraînement (61) est tourné.

10. Dispositif d'entrée/sortie (C) selon l'une quelconque des revendications 1 à 9, dans lequel l'unité de sortie (8) inclut :
une première unité d'affichage (81) située à l'intérieur du trou débouchant de corps (511) ; et
une seconde unité d'affichage (82) située en dehors du trou débouchant de corps (511).

11. Dispositif d'entrée/sortie (C) selon l'une quelconque des revendications 1 à 10, dans lequel le corps (51) est disposé dans une direction dans laquelle se propage la lumière émise depuis la surface d'affichage (85).
